# EUROPÄISCHE PATENTANMELDUNG

(11) **EP 2 200 166 A2**
(43) Veröffentlichungstag der Anmeldung: **23.06.2010**
(21) Anmeldenummer: 09178467.8
(22) Anmeldetag: 09.12.2009
(51) Int. Cl.: H02M 7/217, H02M 7/219

(54) **Belastungsverteilung in einem Wechselrichter zur Verringerung seiner Belastung**

(30) Priorität: 19.12.2008 DE 102008054970; 07.05.2009 DE 102009002903
(71) Anmelder: Robert Bosch GmbH, 70442 Stuttgart (DE)
(72) Erfinder: Poetzl, Thomas, 71364 Winnenden (DE); Spraul, Manfred, 70191 Stuttgart (DE)

(57) **Zusammenfassung**

Zusammen mit einem Steuerungsverfahren betreibt eine Steuerungsvorrichtung (14) für einen Wechselrichter (10) den Wechselrichter (10) zeitweise in einem von mindestens einem möglichen Antriebsschaltzustand (t₁..t₆) und zu anderen Zeiten zeitweise in einem von mindestens zwei möglichen Freilaufzuständen (t₀, t₇) um die Belastung des Wechselrichters zu verringern. Die Steuerungsvorrichtung (14) weist eine Auswahlfunktion (33, 40) auf, die einen während Freilaufzeiten des Wechselrichters (10) verwendeten Freilaufzustand (t₀, t₇) aus den mindestens zwei möglichen Freilaufzuständen (t₀, t₇) unter Berücksichtigung einer Belastung P(I_{Sij}) mindestens eines der Zweige und/oder mindestens eines der Stromventile (Sᵢⱼ) des Wechselrichters (10) auswählt. Ein Wechselrichter (10), der mindestens zwei Zweige umfasst, von denen jeder mindestens ein Stromventil (Sᵢⱼ) und mindestens einen Ausgang (Kᵢ) zum Anschluss einer elektrischen Last (12) aufweist, umfasst eine solche Steuerungsvorrichtung (14).

## Beschreibung

Die Erfindung betrifft ein Steuerungsverfahren für einen Wechselrichter. Außerdem betrifft die Erfindung eine Steuerungsvorrichtung für einen Wechselrichter, wobei die Steuerungsvorrichtung dazu geeignet oder vorgesehen ist, den Wechselrichter zeitweise in einem von mindestens einem möglichen Antriebsschaltzustand zu betreiben und zu anderen Zeiten zeitweise in einem von mindestens zwei möglichen Freilaufzuständen zu betreiben. Des Weiteren betrifft die Erfindung Wechselrichter, der mindestens zwei Zweige umfasst, von denen jeder mindestens ein Stromventil und mindestens einen Ausgang zum Anschluss einer elektrischen Last aufweist.

US 2005/0122072 A1 schlägt vor, je Phase mehrere Halbbrücken zu verwenden, damit sich der Strom und folglich auch die Verlustleistung auf mehrere Schalter verteilt. Dieses Konzept vergrößert jedoch die Anzahl der Schalter und damit den Herstellungsaufwand und Platzbedarf für den Wechselrichter. Der Erfindung liegt die Aufgabe zugrunde, ein gattungsgemäßes Steuerungsverfahren bereitzustellen, das eine Verringerung des Herstellungsaufwands und Platzbedarfs für den Wechselrichter ermöglicht. Darüber hinaus ist es eine Aufgabe der Erfindung, einen Wechselrichter und eine Steuerungsvorrichtung für einen Wechselrichter mit diesem Vorteil bereitzustellen. Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf dem gattungsgemäßen Steuerungsverfahren dadurch auf, dass das Steuerungsverfahren folgende Schritte umfasst: Betreiben des Wechselrichters in einem von mindestens einem möglichen Antriebsschaltzustand des Wechselrichters, Ermitteln einer Belastung mindestens eines Zweigs und/oder mindestens eines Stromventils des Wechselrichters, Auswählen eines Freilaufzustands aus mindestens zwei möglichen Freilaufzuständen des Wechselrichters unter Berücksichtigung der ermittelten Belastung und Betreiben des Wechselrichters in dem ausgewählten Freilaufzustand.

Eine bevorzugte Ausführungsform sieht vor, dass die zu ermittelnde Belastung eine Temperaturbelastung und/oder eine Wärmebelastung und/oder eine Strombelastung ist.

Die Berücksichtigung der Belastung kann eine Verringerung oder Minimierung der Belastung zur Folge haben und/oder auf eine Verringerung oder Minimierung der Belastung abzielen.

Eine andere bevorzugte Ausführungsform sieht vor, dass bei der Berücksichtigung der Belastung eine relative Belastung zwischen den Stromventilen und/oder zwischen den Zweigen und/oder eine absolute Belastung der Stromventile und/oder der Zweige berücksichtigt wird.

Eine weitere bevorzugte Ausführungsform sieht vor, dass der Schritt des Ermittelns der Belastung mittels Messung und/oder mittels Berechnung und/oder mittels Abfrage vorberechneter Belastungswerte aus einer Tabelle erfolgt.

Eine bevorzugte Weiterbildung sieht vor, dass das Auswählen des Freilaufzustands mittels eines Zeitteilungsverhältnisses zwischen den mindesten zwei möglichen Freilaufzuständen und/oder mittels eines Modulationsgrad-Offset beeinflusst wird.

Es ist von Vorteil, wenn während eines Freilaufzustands nur solche Stromventile stromleitend geschaltet werden, die ihren jeweiligen Ausgang mit einem Versorgungsanschluss verbinden, der diesen Stromventilen gemeinsam ist, und/oder dass in einem ersten Freilaufzustand nur an einem ersten Versorgungsanschluss angeschlossene Stromventile durchgeschaltet werden und in einem zweiten Freilaufzustand nur an einem zweiten Versorgungsanschluss angeschlossene Stromventile durchgeschaltet werden.

Das Steuerungsverfahren kann dazu geeignet oder vorgesehen sein, die Stromventile eines Wechselrichters zu steuern, der für mindestens drei Phasen je Phase einen Zweig aufweist und/oder je Zweig mindestens zwei Stromventile, insbesondere genau zwei Stromventile aufweist.

Außerdem baut die Erfindung auf einer gattungsgemäßen Steuerungsvorrichtung dadurch auf, dass die Steuerungsvorrichtung eine Auswahlfunktion aufweist, die dazu geeignet oder vorgesehen ist, einen während Freilaufzeiten des Wechselrichters verwendeten Freilaufzustand aus den mindestens zwei möglichen Freilaufzuständen unter Berücksichtigung einer Belastung mindestens eines der Zweige und/oder mindestens eines der Stromventile des Wechselrichters auszuwählen, insbesondere wobei die Steuerungsvorrichtung dazu geeignet oder vorgesehen ist, ein erfindungsgemäßes Steuerungsverfahren durchzuführen.

Des Weiteren baut die Erfindung auf einem gattungsgemäßen Wechselrichter dadurch auf, dass der Wechselrichter eine erfindungsgemäße Steuerungsvorrichtung umfasst.

Die Erfindung wird nun mit Bezug auf die begleitenden Figuren anhand besonders bevorzugter Ausführungsformen erläutert.

Es zeigen:
- Fig. 1 und 2: schematische Schaltbilder einer ersten bzw. zweiten Ausführungsform eines erfindungsgemäßen Wechselrichters mit einem möglichen schaltungstechnischen Aufbau von Stromventilen (Schaltern) des Wechselrichters in einer bipolaren Technologie bzw. in einer Feldeffekt-Technologie mit daran angeschlossenen Wicklungssträngen einer Drehstrommaschine;
- Fig. 3: ein schematisches Ersatzschaltbild zu einem Antriebszustand des Wechselrichters mit angeschlossener Drehstrommaschine;
- Fig. 4a bis 4f: schematische Darstellungen von Ersatzschaltbildern zu einem Beispiel einer Abfolge von Betriebszuständen des Wechselrichters;
- Fig. 5: einen Ausschnitt eines schematischen Raumzeigerdiagramms zur Erläuterung einer Raumzeigermodulation;
- Fig. 6: eine Tabelle zur Beschreibung einer Ausführungsform einer Raumzeigermodulation mit erfindungsgemäßer Zeitteilung zwischen dem ersten und zweiten Freilaufzustand; und
- Fig. 7: ein schematisches Blockdiagram einer Ausführungsform einer Anordnung zur Steuerung einer Zeitteilung für Freilaufzustände.

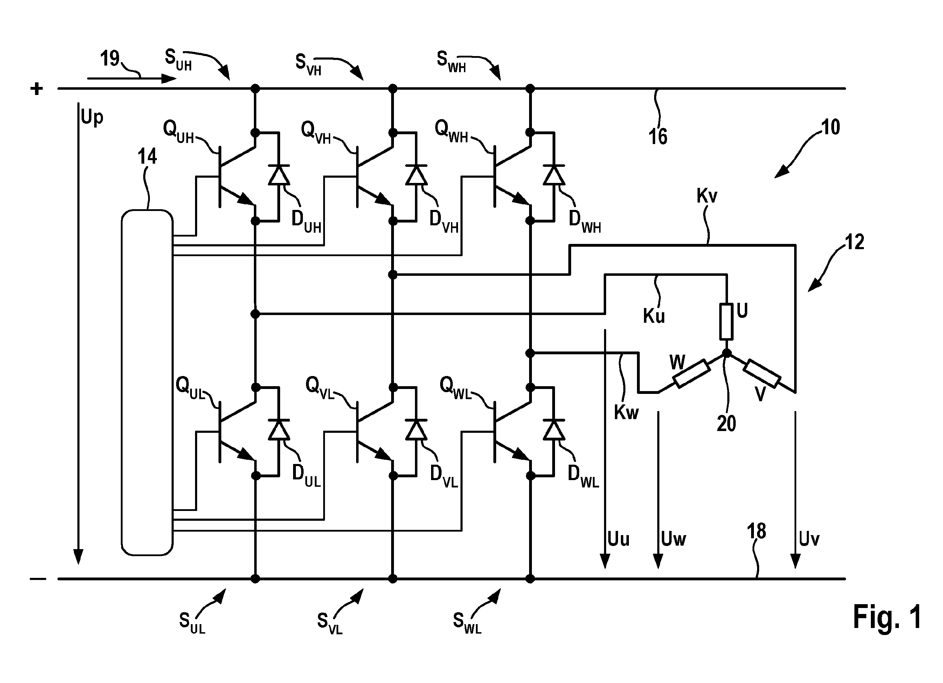

Die in Fig. 1 gezeigte erste Ausführungsform des Wechselrichters 10 umfasst eine Schalteransteuerung 14 (die hier auch als Kontrollelektronik 14 bezeichnet wird) sowie für jeden der Wicklungsstränge i je einen oberseitigen Schalter (Stromventil) S_{iH} und je einen unterseitigen Schalter S_{iL}. Der Index i kann die Werte U, V, W und der Index j die Werte H und L annehmen. Mittels der Schalter Sᵢⱼ kann mittels abwechselnden Verbindens mit einer positiv 16 und einer negativ 18 gepolten Stromversorgungsleitung auf den Anschlussleitungen Kᵢ für jeden der Stränge i in Bezug zu der negativ gepolten Versorgungsleitung 18 je eine Wechselspannung Uᵢ bereitgestellt werden. Mittels der Schalteransteuerung 14 kann jede der Anschlussleitungen Kᵢ in jeden von folgenden drei Zuständen geschaltet werden. In dem ersten Schaltzustand ist das Schalterpaar S_{UH}, S_{UL} bzw. S_{VH}, S_{VL} bzw. S_{WH}, S_{WL}, das zu der jeweiligen Anschlussleitung Kᵢ führt, hochohmig, d.h. es stellt in Hauptstromflussrichtung 19 der Spannungsquelle 28 weder eine Verbindung zu der positiven 16 noch zu der negativen 18 Versorgungsleitung dar. In einem zweiten Schaltzustand verbindet der jeweilige Schalter S_{iH} mit der positiven Versorgungsleitung 16. In einem dritten Schaltzustand verbindet der jeweilige Schalter S_{iL} mit der negativen Versorgungsleitung 18. Die Fig. 1 zeigt einen schaltungstechnischen Aufbau für die Schalter Sᵢⱼ, von denen jeder einen steuerbaren Halbleiter Qᵢⱼ mit je einer Freilaufdiode Dᵢⱼ aufweist. Der steuerbare Halbleiter Qᵢⱼ ist typischerweise ein IGBT (insulated-gate bipolar transistor) oder MOSFET (metal oxide semiconductor field-effect transistor). Die Schalter Sᵢⱼ können mit je einer parallelgeschalteten Freilaufdiode Dᵢⱼ versehen sein.

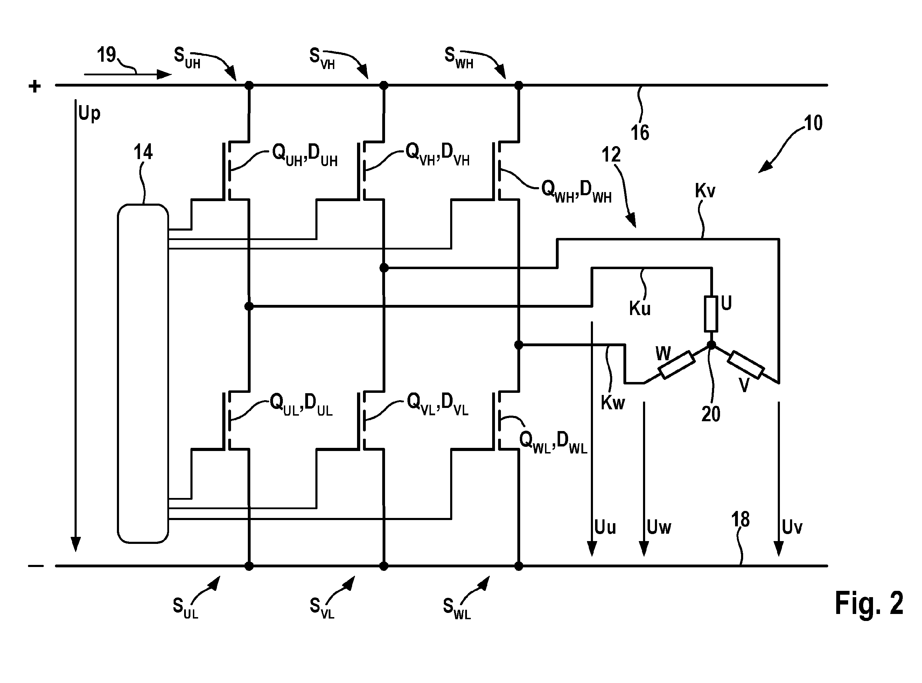

In der in Fig. 2 gezeigten zweiten Ausführungsform des Wechselrichters 10 ist die Freilaufdiode Dᵢⱼ nicht gesondert dargestellt, da sie (anderes als bei einem IGBT) hier nicht als separates Bauelement vorhanden ist, sondern als parasitärer oder integrierter Bestandteil des steuerbaren Halbleiters Qᵢⱼ, welcher beispielsweise ein MOSFET sein kann.

In elektromechanischen Stellern, wie elektromechanischen Lenkungen und elektrischen Bremsen, treten Betriebszustände wie "Halten am Endanschlag" oder "Zugespannt mit maximaler Kraft" auf, in denen der zugehörige Elektromotor 12 in Bezug auf seine Nenngrößen bei geringer Drehgeschwindigkeit oder sogar Stillstand mit einem hohen Drehmoment betrieben wird. Bei konventioneller Modulation ist in den problematischsten Motorstellungen zumindest einer der Schalter Sᵢⱼ in einem Bereich von 360° geteilt durch die Anzahl n der Phasen dauernd leitend. Um eine Haltbarkeit des Wechselrichters 10 und seiner Leistungshalbleiter Qᵢⱼ, Dᵢⱼ zu gewährleisten, werden konventionelle Wechselrichter so bemessen, dass alle Schalter Sᵢⱼ der Halbbrücken den gesamten Phasenstrom Iᵢ dauerhaft tragen können. Es muss also entweder ein größerer (und damit beispielsweise teurerer) steuerbarer Halbleiter Qᵢⱼ verwendet werden, als er bei symmetrischer Verteilung der Belastungen P(I_{Sij}) über die steuerbaren Halbleiter Qᵢⱼ erforderlich wäre, oder es müssen kostenintensive Maßnahmen zur Kühlung ergriffen werden.

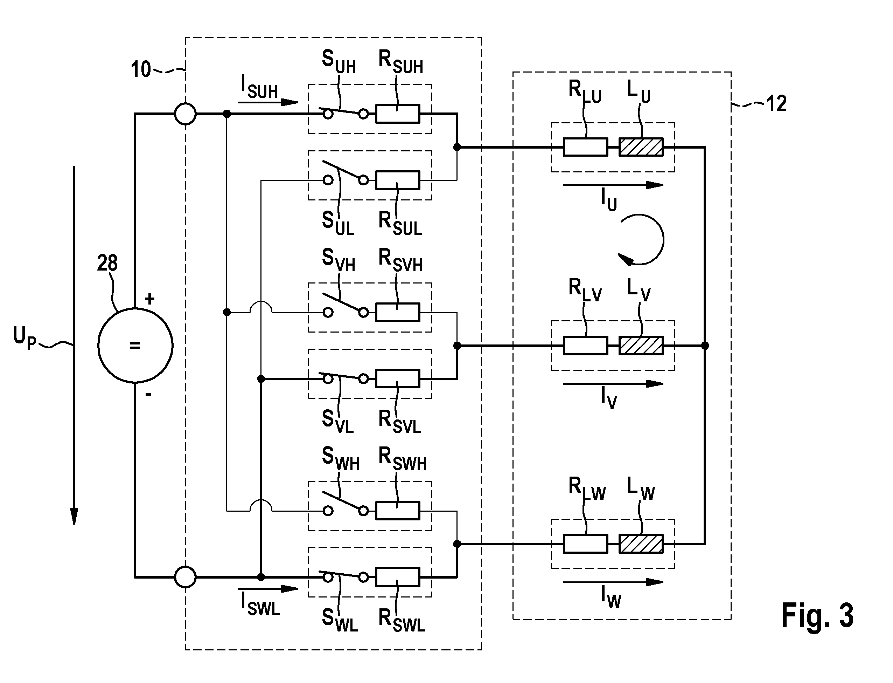

Fig. 3 zeigt für einen ersten Antriebszustand t₁ ein Ersatzschaltbild des Wechselrichters 10 mit der angeschlossenen Drehstrommaschine 12, die sich im Stillstand befindet. R_{Li} repräsentiert den Strangwiderstand und Lᵢ die Induktivität des jeweiligen Strangs. Sᵢⱼ stellt die eigentliche Schaltfunktion (ohne ohmsche Verluste) und R_{Sij} den ohmschen Widerstand des Schalters Sᵢⱼ dar. R_{Sij} beträgt beispielsweise etwa 20 mΩ, R_{Li} etwa 200 mΩ und die Versorgungsspannung Up etwa 10 V. Es gibt insgesamt sechs Antriebszustände t₁..t₆ sowie zwei Freilaufzustände t₀ und t₇. Da sich während der sehr kurzen Zeit des Umschaltens von dem oberen Schalter S_{iH} des Zweiges i auf den Schalter S_{iL} des unteren Teils des Zweiges i (und umgekehrt) die Freilaufdioden D_{iL} (bzw. D_{iH}) in den Schaltern S_{iL} in Durchlassrichtung befinden, weist während des Betriebs jeder Zweig i immer genau einen leitenden Schalter Sᵢⱼ auf. Daher können sich in den Strängen i der elektrischen Maschine Gleichströme Iᵢ aufbauen, die nach Abschalten der Stromzuführung mit einer Zeitkonstante Tᵢⱼ = Lᵢ/(R_{Li} + R_{Sij}) der Freilaufteilstromkreise t₀ᵢ, t₇ᵢ von beispielsweise 10 ms = 2,2 mH/220 mΩ abklingen.

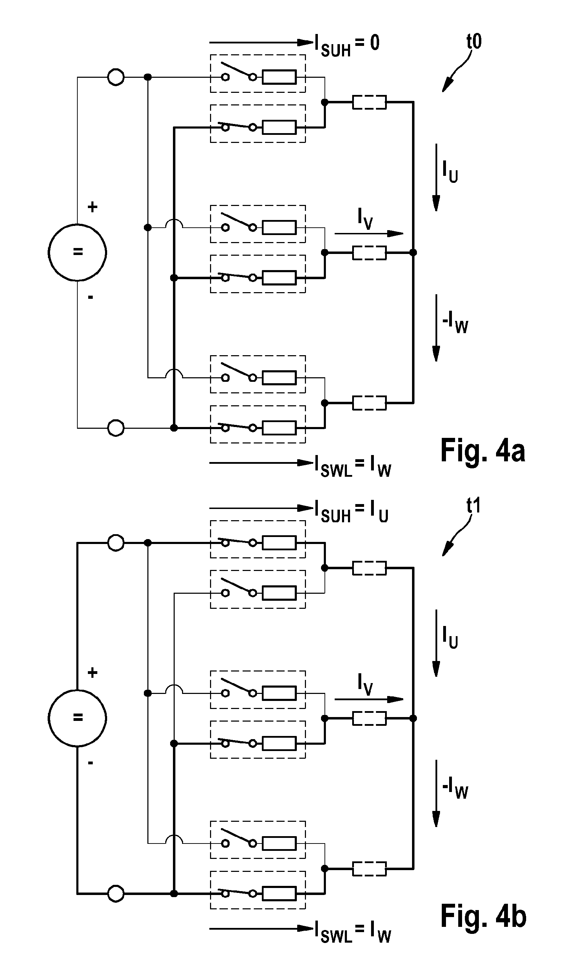

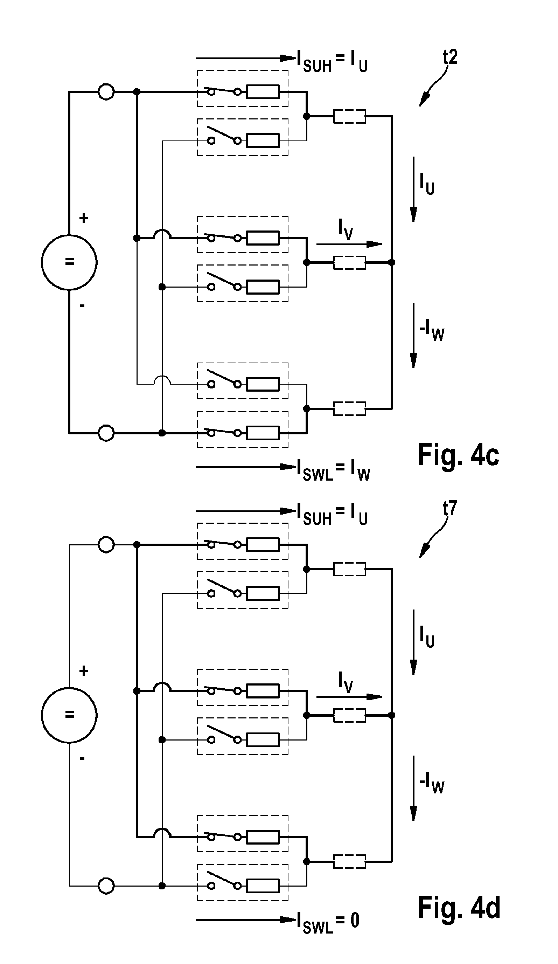

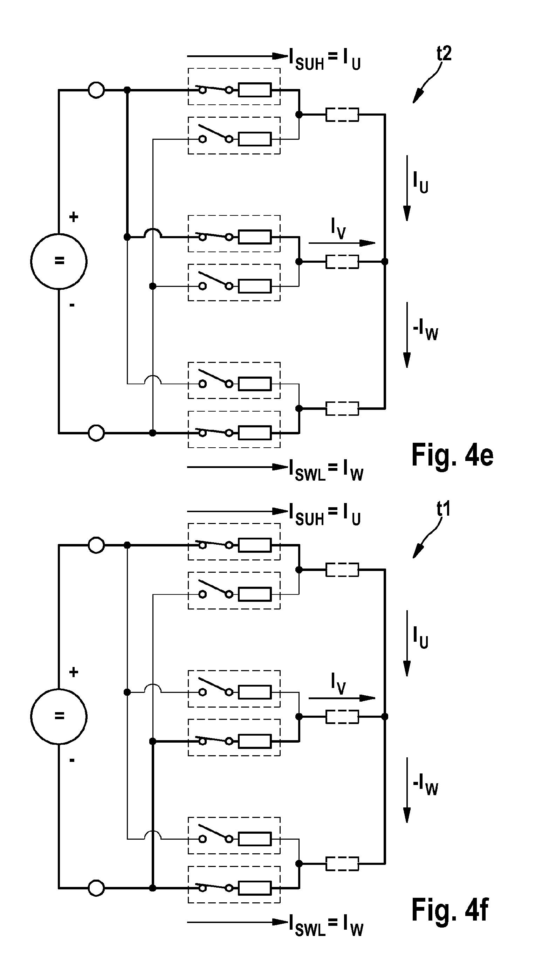

Fig. 4b und Fig. 4f zeigen denselben Antriebszustand t₁ in stärker schematisierter Form. Ein weiterer Antriebszustand t₂ der insgesamt sechs möglichen Antriebszustände t₁ bis t₆ ist in den Fig. 4c und 4e wiedergegeben. Fig. 4a und 4d zeigen Freilaufzustände t₀, t₇, in denen die Spannungsquelle 28 abgeklemmt ist. Damit der Strom Iᵢ in den Strängen i nicht zu stark ansteigt, werden die Schalter Sᵢⱼ typischerweise so geschaltet, dass keine der Antriebsphasen t_{1..}t₆ mehr als ein paar Mikrosekunden andauert. Also befindet sich der Wechselrichter 10 typischerweise in der überwiegenden Zeit im Freilauf, wobei typischerweise abwechselnd beide Freilaufzustände t₀, t₇ werden, um dadurch Schaltverluste zu vermeiden, indem bei jedem Zustandswechsel nur einer der Zweige i geschaltet wird. Die Fig. 4a bis 4f zeigen eine typische Abfolge von Schaltzuständen t₀..t₇ des Wechselrichters 10 über eine gesamte Schaltabfolgeperiode Tₚ.

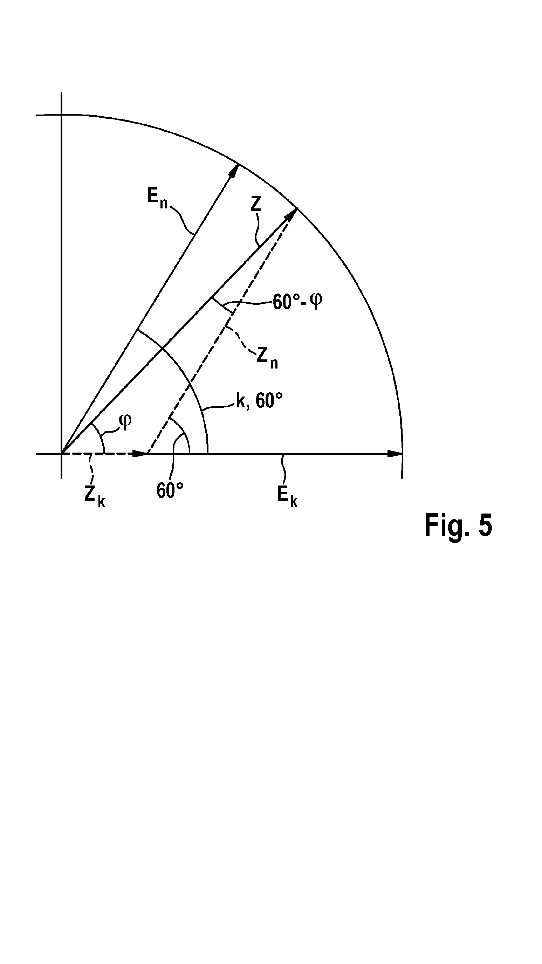

Fig. 5 zeigt für einen Modulationssektor k einen Ausschnitt eines Raumzeigerdiagramms. Jeder der Elementarraumzeiger Eₖ und Eₙ repräsentiert eine Richtung und Stärke |Eₖ| bzw. |Eₙ| eines magnetischen Drehfeldes, das mittels des Antriebszustands tₖ bzw. tₙ erzeugt wird (mit k = 1..6 und n = 1 + k mod 6). Innerhalb des Modulationssektors k kann mittels Addition zweier Teilraumzeiger Zₖ, Zₙ, die in Richtung der Elementarraumzeiger Eₖ bzw. Eₙ zeigen, jeder gewünschte Raumzeiger Z mit jeder gewünschten Stärke |Z| und Richtung ϕ gebildet werden. Dies geschieht mittels unterschiedlich langer Zeitdauern der Antriebszustände tₖ und tₙ. Hierfür wird typischerweise eine Pulsweitenmodulation angewendet. Aus Sinussatz und Wechselwinkelsatz folgt, dass das Verhältnis der Stärken |Zₖ|, |Zₙ| der Teilraumzeiger Zₖ, Zₙ mit t_{nP}/t_{kP} = (sin ϕ)/ sin(60°- ϕ) (Gleichung 1) zu bemessen ist.

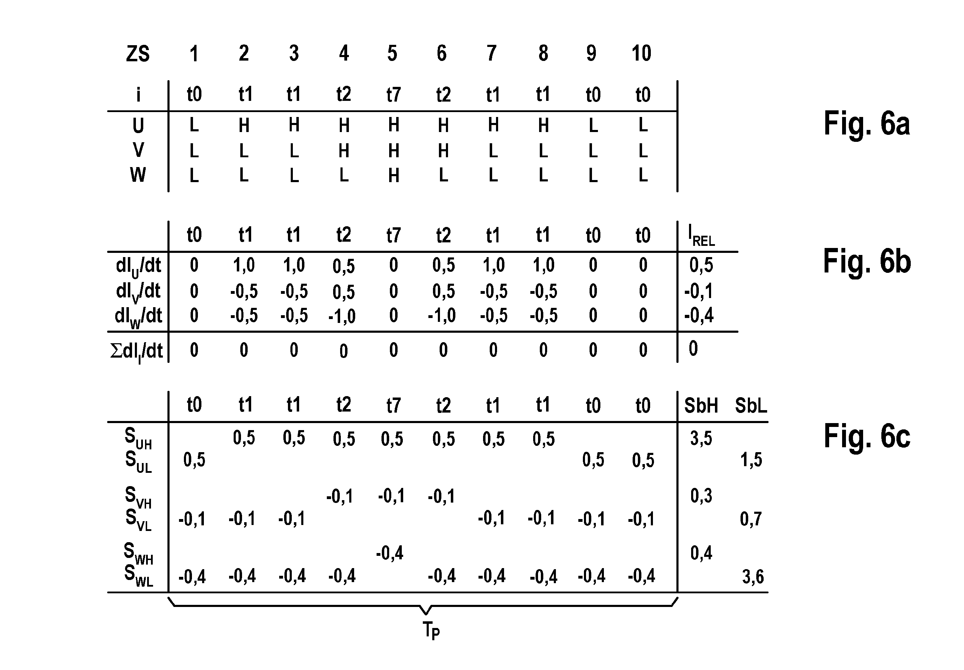

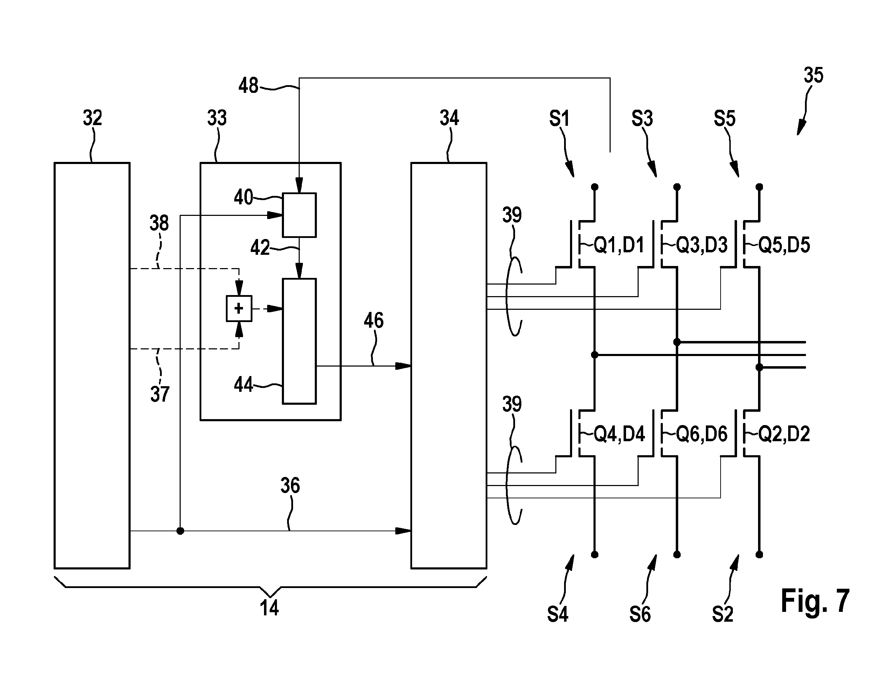

Fig. 6a erläutert zu dem Beispiel der Fig. 4a bis 4f ein erfindungsgemäßes Modulationsverfahren, wobei die Antriebszustände tₖ tₙ je nach gewünschter Stärke |Zₖ| bzw. |Zₙ| des Teilraumzeigers Zₖ bzw. Zₙ über eine antriebszustandsspezifische Anzahl t_{kP} bzw. t_{nP} von Zeitscheiben ZS aufrecht erhalten oder wiederholt werden. Die auf eine Schaltabfolgeperiode Tₚ bezogenen Gesamtzeiten t_{0P}..t_{7P} eines Betriebszustandes t₀..t₇ werden hier mit dem Index P gekennzeichnet. Bei konstanter Zeitdauer der Bestromung in den Zeitscheiben tₖ, tₙ ist ϕ gemäß Gleichung 1 im Beispiel ca. 19°. Fig. 6b gibt eine Übersicht über Stromänderungsgeschwindigkeiten dIᵢ/dt der Ströme Iᵢ in den Strängen i, die sich aufgrund der Stranginduktivitäten Lᵢ über mehrere Schaltabfolgeperioden Tₚ zu Gleichströmen Iᵢ in den Strängen i aufintegrieren. Daneben findet in den Freilaufzuständen t₀, t₇ in den Widerständen R_{Sij} und R_{Li} fortlaufend eine Vernichtung von gespeicherter Energie statt, die sich ebenfalls über mehrere Schaltabfolgeperioden Tₚ aufintegriert. Dadurch entsteht trotz der häufigen Schaltvorgänge ein Fließgleichgewicht mit der Zeitkonstanten Tᵢⱼ = 2Lᵢⱼ/(2R_{Sij} + 2R_{Li}). Die Summenspalte I_{REL} gibt Auskunft über die aus der Aufintegration resultierende relative Höhe I_{REL} der Gleichströme Iᵢ in den Strängen i. Fig. 6c gibt eine Übersicht über die Strombelastungen der Schalter Sᵢⱼ. Die Summenspalten SBH, SBL geben Auskunft über die relative gesamte Strombelastung SBH, SBL der einzelnen Schalter Sᵢⱼ. Erfindungsgemäß wird in dem Beispiel der Fig. 6a bis 6c der Freilaufzustand t₀ zwei Zeitscheiben ZS länger aufrechterhalten als der Freilaufzustand t₇, um so den Schalter S_{UH} zu entlasten. Dabei wird die Tatsache genutzt, dass durch Änderung der Zeitteilung t_{0P}/t_{7P} zwischen den unterschiedlichen Freilaufzuständen t₀, t₇ sich weder Stärke |Z| noch Richtung ϕ des Raumzeigers Z ändert. Die Gesamtzeit aller Antriebszustände t₁..t₆ wird hier mit t_{AP} bezeichnet. Typischerweise folgt die Wärmeerzeugung in einem Schalter Sᵢⱼ einer nichtlinearen, beispielsweise quadratischen und nicht notwendigerweise spiegelsymmetrischen Funktion P(Iᵢ). Erfindungsgemäß wird die Zeitteilung t_{0P}/t_{7P} gezielt beeinflusst, um eine gleichmäßigere Belastung P(Iₛᵢⱼ) der Schalter Sᵢⱼ zu erreichen. Dazu wurde im Beispiel der Fig. 6a bis 6c die Freilaufphase t₀ zulasten der Freilaufphase t₇ um eine Zeitscheibe ZS verkürzt. Da dabei die Anzahl der Zeitscheiben ZS und die Schaltstellungen H, L der Antriebsphase t₁, t₂ unverändert bleiben und die Freilaufphasen t₀, t₇ in der Aufintegration keinen Stromänderungsgeschwindigkeitsbeitrag dlᵢ/dt liefern, hat dies keinen Einfluss auf den mittels der Schaltfolge erzeugten Raumzeiger Z. Aus der veränderten Zeitteilung t_{0P}/t_{7P} zwischen den beiden Freilaufphasen t₀, t₇ resultiert eine Verringerung der Strombelastung SBH des höchstbelasteten Schalters S1, wobei die dadurch ebenfalls verursachte Erhöhung der Strombelastung SBL des Schalters S2 immer noch deutlich niedriger ist, als die Strombelastung SBH des höchstbelasteten Schalters S1 bei konventionellen Zeitteilung t_{0P}/t_{7P} der Freilaufzustände t₀, t₇. Bei konstantem ϕ ist dann eine optimale Zeitteilung t_{0P}/t_{7P} der Freilaufzustände t₀, t₇ erreicht, wenn die Gesamtbelastung über die gesamte Schaltabfolgeperiode Tₚ in mindestens zwei stärkstbelasteten Zweigen gleich groß ist. Dies führt zu folgendem Ansatz: (t_{AP} + t_{7P}) P(Iᵣ) = (t_{AP} + t_{0P}) P(Iₜ), wobei die Indizes r, t die beiden in einer Schaltabfolge stärkstbelasteten Zweige kennzeichnen. Auf der Winkelhalbierenden des Raumsektors (ϕ = 30°) ist t_{nP}/t_{kP} und auch q typischerweise gleich 1, so dass bei einer konventionellen Schalteransteuerung der angestrebte Belastungsausgleich in diesem Ausnahmefall ohnehin stattfindet. Mit der momentanen schalterpaarbezogenen Verteilung der Verlustleistungen während der Nutzung des jeweiligen Schalters S_{rH}, S_{tL}: q = P(Iᵣ) / P(Iₜ) und t_{7P} = 1 - t_{AP} - t_{0P} folgt, dass eine optimale Belastungsverteilung dann erreicht wird, wenn t_{0P} = (q - t_{AP})/(q + 1) bzw. t_{7P} = (1-q t_{AP})/(q + 1) bzw. (t_{0P} - t_{7P}) = (1 + t_{AP})(q - 1)/(q + 1) (Gleichung 2) erfüllt ist. Gegenüber der in konventionellen Wechselrichtern üblichen Zeitteilung der Freilaufzustände t₀, t₇ lässt sich eine Entlastung des stärkstbelasteten Schalters Sᵣⱼ schon dadurch erreichen, dass die beiden Freilaufzustände mit t₀ₚ = t₇ₚ zeitlich gleichgewichtet werden. Im Vergleich zu einer solchen zeitlichen Gleichgewichtung t₀ₚ = t₇ₚ der beiden Freilaufzustände t₀, t₇ ist das darüber noch hinausgehende mögliche Entlastungspotential eines ursprünglich stärkstbelasteten Schalters Sᵣⱼ gleich ΔSBH = P(Iᵣ)(1+ t_{AP})(q - 1)/(q + 1). Das über einen Betrieb mit t₀ₚ = t₇ₚ hinausgehende Entlastungspotential ist also (abgesehen davon, dass es auch mit der bezogenen Gesamtlänge t_{AP} der Antriebszustände t₀, t₇ steigt) umso größer, je stärker q von 1 abweicht, also je unterschiedlicher die Ströme zwischen den beiden stärkstbelasteten Zweigen sind, wobei eine Nichtlinearität der Funktion P(I) diesen Zusammenhang mehr Gewicht verleihen kann. Gleichung 2 folgend kann die Zeitteilung t_{0P}/t_{7P} zwischen den beiden Freilaufzuständen t₀, t₇ eine kontinuierliche Optimierung der Belastungsverteilung ohne Zuhilfenahme externer Messwerte 48 (vgl. Fig. 7) laufend angepasst werden. Entsprechende Überlegungen gelten für alle Raumsektoren. Wenn - bei langsamer Drehung des Läufers der elektrischen Maschine 12 - der Raumzeiger Z seine Richtung ϕ ändert, kann eine weitergehende Optimierung der Belastungsverteilung dadurch erreicht werden, dass eine durch die Änderung der Richtung ϕ implizierte Änderung der Belastungsverteilung mittels vorauseilender Reaktion auf zukünftig zu erwartende, einzustellende Richtungen ϕ berücksichtigt wird. Eine weitergehende Optimierung kann auch erreicht werden, wenn zusätzlich berücksichtigt wird, dass es unter Umständen sinnvoll sein kann, eine Unsymmetrie der Belastungsverteilung zwischen den beiden stärkstbelasteten Schaltern Sᵣⱼ bzs. Sₜⱼ bewusst in Kauf zu nehmen, wenn der Raumzeiger Z innerhalb eines Zeitraums in unterschiedlichen Raumsektoren k einzustellen ist, wobei der Zeitraum nicht wesentlich größer ist als eine (typischerweise durch Bonddrähte bestimmten) thermische Zeitkonstante Tₜₕ der Schalter Sᵣⱼ, Sₜⱼ.

Es gibt konventionelle Wechselrichter, in denen die Häufigkeit und/oder mittlere Dauer der Schaltfolgen mittels schalterspezifischer Modulationsgrade mᵢ eingestellt wird. Für das in den Fig. 4 bis 6 beschriebene Beispiel ergeben sich für die oberen Schalter der Zweige folgende Modulationsgrade: m_{U} = t_{1P} + t_{2P} + t_{7P}, m_{V} = t_{2P} + t_{7P} und m_{W} = t_{7P}. Für die unteren Schalter der Zweige ergeben sich (1 - m_{U}) = tₒₚ und (1 - m_{V}) = t_{0P} + t_{1P} und (1 - m_{W}) = t_{0P} + t_{1P} + t_{2P}. Damit berechnet sich die Summe m_{S} der Modulationsgrade m_{U}, m_{V}, m_{W} zu m_{S} = 3/2(1 + t_{2P} - t_{1P} - (t_{0P} - t_{7P})). Die Belastungsverteilung kann also mittels t_{0P} - t_{7P} ohne Raumzeigeränderung beeinflusst werden und mittelbar auch über den sich daraus ergebenden Zusammenhang: (t_{0P} - t_{7P}) = 1 - 2 m_{S}/3 - t_{1P} + t_{2P} (Gleichung 3) mittels eines gemeinsamen Offsets m_{c} auf alle Modulationsgrade mᵢ, wobei die Einschaltzeiten der Antriebsphasen t₁..t₆ dabei nicht verändert werden. Mit Gleichungen 2 und 3 errechnet sich eine optimale Belastungsverteilung dann, wenn der Summenmodulationsgrad m_{S} = 3 (1 + t_{2P} - q t_{1P}) / (q + 1) beträgt (Gleichung 4). Entsprechende Überlegungen gelten für die Belastungssteuerung für die anderen fünf Raumsektoren. Der anzuwendende Modulationsgrad-Offset m_{C} ist die Differenz von m_{S} abzüglich eines Summenmodulationsgrads m_{S0}, der von der Schalteransteuerung 14, 32 ohne Berücksichtigung der Belastungsverteilung angewendet wird. Der optimale Modulationsgrad-Offset m_{C} berechnet sich näherungsweise mit m_{C} = (Iₜⱼ² - mₜ Iₜⱼ² - mᵣ Iᵣⱼ²) / (Iₜⱼ² - mᵣ Iᵣⱼ²) ≅ (1 - mₜ - mᵣ)/2 (Gleichung 5), wobei mᵣ der Modulationsgrad des Zweiges r, mit dem größten Strangstrom Iᵣⱼ und mₜ der Modulationsgrad des Zweigs ist, in dem der negativste Strangstrom Iₜⱼ fließt. Ein solcher Modulationsgrad-Offset m_{C}, der zu allen Modulationsgraden m_{U}, m_{V}, m_{W} hinzuaddiert wird, bewirkt, dass mittels konventioneller nachfolgender Schritte Modulationsmuster mit optimaler Zeitteilung t_{0P}/t_{7P} der Freilaufphasen t₀, t₇ erzeugt werden. Der Modulationsgrad-Offset m_{C} kann kontinuierlich oder blockhaft angewendet werden. In beiden Varianten ist ein negativer Modulationsgrad-Offset m_{C} möglich. Die zeitliche Länge der Zeitblöcke einer Manipulation des Modulationsgrad-Offsets m_{C} sollte nicht größer sein als eine kürzeste belastungsrelevante thermische Zeitkonstante Tₜₕ des Wechselrichters, die typischerweise im Bereich zwischen 0,1 ms und 100 ms liegt.

Fig. 7 zeigt eine Anordnung zur Schalteransteuerung 14 für eine Zeitteilung t_{0P}/t_{7P} der zwei Freilaufzustände t₀ und t₇ zwecks Belastungsverteilung. Die Anordnung umfasst einen konventionellen ersten Schaltmustererzeuger 32, einen erfindungsgemäßen Freilaufoptimierer 33, einen konventionellen Pulsweitenmodulator 34 und eine Anordnung 35 von Zweigen eines Wechselrichters 10. Der erste Schaltmustererzeuger 32 ist dazu vorgesehen, eine Abfolge von Schaltsignalen 36, 37, 38 zur Aktivierung von Antriebszuständen t₁..t₆ bzw. zur Aktivierung von Freilaufzuständen t₀ bzw. t₇ zu erzeugen. Der Pulsweitenmodulator 36 ist dazu vorgesehen, aus den Schaltsignalen 36, 37, 38 pulsweitenmodulierte Steuersignale 39 für die Schalter Sᵢⱼ zu erzeugen. Der Freilaufoptimierer 34 kann als optionale oder nachrüstbare Vorrichtung oder Softwarefunktion realisiert werden. In der gezeigten Ausführungsform erhält eine Steuerung 40 des Freilaufoptimierers 34 die Schaltsignale 36 zur Aktivierung der Antriebszustände t₁..t₆ und berechnet daraus eine Zeitteilung t_{0P}/t_{7P} zwischen den beiden Freilaufzuständen t₀, t_{7.} Mit diesen Informationen kann die Steuerung 40 Steuersignale 42 für einen zweiter Schaltmustererzeuger 44 erzeugen, der modifizierte Schaltsignale 46 zur Aktivierung der Freilaufzustände t_{0P}/t_{7P} erzeugt. Eine Weiterbildung sieht vor, dass in die Berechnung der Zeitteilung t_{0P}/t_{7P} Messergebnisse 48, insbesondere Strom-, Spannungs-, Temperaturmesswerte aus einem Bereich der Schalter Sᵢⱼ und/oder der elektrischen Maschine 12, einbezogen werden. In einer Weiterbildung oder alternativ können auch ein Drehmoment sowie eine Position und/oder ein elektrischer und/oder mechanischer Winkel der elektrischen Maschine 12 erfasst werden, um daraus auf einen Belastungszustand P(I_{Sij}), insbesondere einen Bestromungszustand I_{Sij}, des Wechselrichters 10 und dessen Schalter Sᵢⱼ rückzuschließen und eine Zeitteilung t_{0P}/t_{7P} zwischen Freilaufzuständen t₀, t₇ zu optimieren. Die Erfindung ist insbesondere für den Betrieb eines Wechselrichters 10 von Vorteil, in dem eine Gesamtzeit t_{0P} + t_{7P} der Freilaufzustände t_{0,} t₇ größer ist als ein Viertel einer Gesamtzeit t_{AP} der Antriebszustände t₁..t₆, insbesondere größer ist als die Gesamtzeit t_{AP} der Antriebszustände t₁..t₆, insbesondere größer ist als das Vierfache oder Zehnfache der Gesamtzeit t_{AP} der Antriebszustände t₁..t₆.

## Patentansprüche

1. Steuerungsverfahren für einen Wechselrichter (10), wobei das Steuerungsverfahren folgende Schritte umfasst:
- Betreiben des Wechselrichters (10) in einem von mindestens einem möglichen Antriebsschaltzustand (t₁..t₆) des Wechselrichters (10);
- Ermitteln einer Belastung P(I_{Sij}) mindestens eines Zweigs und/oder mindestens eines Stromventils (Sᵢⱼ) des Wechselrichters (10);
- Auswählen eines Freilaufzustands (t₀, t₇) aus mindestens zwei möglichen Freilaufzuständen (t₀, t₇) des Wechselrichters (10) unter Berücksichtigung der ermittelten Belastung (P(I_{Sij})); und
- Betreiben des Wechselrichters (10) in dem ausgewählten Freilaufzustand (t₀, t₇).

2. Steuerungsverfahren gemäß Anspruch 1, **dadurch gekennzeichnet, dass** die zu ermittelnde Belastung (P(I_{Sij})) eine Temperaturbelastung und/oder eine Wärmebelastung und/oder eine Strombelastung ist.

3. Steuerungsverfahren gemäß Anspruch 1 oder 2, **dadurch gekennzeichnet, dass** die Berücksichtigung der Belastung (P(I_{Sij})) eine Verringerung oder Minimierung der Belastung (P(I_{Sij})) zur Folge hat und/oder auf eine Verringerung oder Minimierung der Belastung (P(I_{Sij})) abzielt.

4. Steuerungsverfahren gemäß einem der Ansprüche 1 bis 3, **dadurch gekennzeichnet, dass** bei der Berücksichtigung der Belastung (P(I_{Sij})) eine relative Belastung zwischen den Stromventilen (Sᵢⱼ) und/oder zwischen den Zweigen und/oder eine absolute Belastung (P(I_{Sij})) der Stromventile (Sᵢⱼ) und/oder der Zweige berücksichtigt wird.

5. Steuerungsverfahren gemäß einem der Ansprüche 1 bis 4, **dadurch gekennzeichnet, dass** der Schritt des Ermittelns der Belastung (P(I_{Sij})) mittels Messung und/oder mittels Berechnung und/oder mittels Abfrage vorberechneter Belastungswerte aus einer Tabelle erfolgt.

6. Steuerungsverfahren gemäß einem der Ansprüche 1 bis 5, **dadurch gekennzeichnet, dass** das Auswählen des Freilaufzustands (t₀, t₇) mittels eines Zeitteilungsverhältnisses (t_{0P}/t_{7P}) zwischen den mindesten zwei möglichen Freilaufzuständen (t₀, t₇) und/oder mittels eines Modulationsgrad-Offsets (m_{C}) beeinflusst wird.

7. Steuerungsverfahren gemäß einem der Ansprüche 1 bis 6, **dadurch gekennzeichnet, dass** während eines Freilaufzustands (t₀, t₇) nur solche Stromventile (Sᵢⱼ) stromleitend geschaltet werden, die ihren jeweiligen Ausgang mit einem Versorgungsanschluss (16, 18) verbinden, der diesen Stromventilen (Sᵢⱼ) gemeinsam ist und/oder dass in einem ersten Freilaufzustand (t₀) nur an einem ersten Versorgungsanschluss (18) angeschlossene Stromventile (S_{iL}) durchgeschaltet werden und in einem zweiten Freilaufzustand (t₇) nur an einem zweiten Versorgungsanschluss (16) angeschlossene Stromventile (S_{iH}) durchgeschaltet werden.

8. Steuerungsverfahren gemäß einem der Ansprüche 1 bis 7, **dadurch gekennzeichnet, dass** das Steuerungsverfahren dazu geeignet oder vorgesehen ist, die Stromventile (Sᵢⱼ) eines Wechselrichters (10) zu steuern, der für mindestens drei Phasen (i) je Phase (i) einen Zweig aufweist, und/oder je Zweig mindestens zwei Stromventile (S_{iL}, S_{iH}), insbesondere genau zwei Stromventile (S_{iL}, S_{iH}) aufweist.

9. Steuerungsvorrichtung (14) für einen Wechselrichter (10), wobei die Steuerungsvorrichtung (14) dazu geeignet oder vorgesehen ist, den Wechselrichter (10) zeitweise in einem von mindestens einem möglichen Antriebsschaltzustand (t₁..t₆) zu betreiben und zu anderen Zeiten zeitweise in einem von mindestens zwei möglichen Freilaufzuständen (t₀, t₇) zu betreiben, **dadurch gekennzeichnet, dass** die Steuerungsvorrichtung (14) eine Auswahlfunktion (33, 40) aufweist, die dazu geeignet oder vorgesehen ist, einen während Freilaufzeiten (t₀, t₇) des Wechselrichters (10) verwendeten Freilaufzustand (t₀, t₇) aus den mindestens zwei möglichen Freilaufzuständen (t₀, t₇) unter Berücksichtigung einer Belastung P(I_{Sij}) mindestens eines der Zweige und/oder mindestens eines der Stromventile (Sᵢⱼ) des Wechselrichters (10) auszuwählen, insbesondere wobei die Steuerungsvorrichtung (14) dazu geeignet oder vorgesehen ist, ein Steuerungsverfahren gemäß einem der Ansprüche 1 bis 8 durchzuführen.

10. Wechselrichter (10), der mindestens zwei Zweige umfasst, von denen jeder mindestens ein Stromventil (Sᵢⱼ) und mindestens einen Ausgang (Kᵢ) zum Anschluss einer elektrischen Last (12) aufweist, **dadurch gekennzeichnet, dass** der Wechselrichter (10) eine Steuerungsvorrichtung (14) gemäß Anspruch 9 umfasst.
